# EUROPÄISCHE PATENTSCHRIFT

(11) **EP 1 136 940 B1**
(45) Veröffentlichungstag und Bekanntmachung des Hinweises auf die Patenterteilung: **21.05.2008**
(21) Anmeldenummer: 00106222.3
(22) Anmeldetag: 22.03.2000
(51) Int. Cl.: G06K 19/07

(54) **Chipkarte**
Chip card
Carte à puce

(43) Veröffentlichungstag der Anmeldung: 26.09.2001
(73) Patentinhaber: Infineon Technologies AG, 81669 München (DE)
(72) Erfinder: Reiner, Robert, 85579 Neubiberg (DE); Melchior, Marc, 85411 Hohenkammer (DE); Gaul, Lorenz, Dr, 85101 Lenting (DE); Schraud, Gerhard, Dr., 86415 Mering (DE); Eichner, Dierk, Dr., 80689 München (DE); Nebel, Gerhard, Dr., 87509 Immenstadt (DE); Kargl, Walter, 8020 Graz (AT); Melcher, Gebhard, 8045 Weinitzen (AT)
(74) Vertreter: Epping - Hermann - Fischer

(56) Entgegenhaltungen:
- US-A- 5 220 158
- US-A- 5 874 725

## Beschreibung

Die Erfindung betrifft eine Chipkarte gemäß dem Oberbegriff des Anspruchs 1.

Gattungsgemäße Chipkarten mit einem ASK-Modulationsgrad von 10% (ASK = Amplitude-Shift-Keying = Amplitudenmodulation) sind beispielsweise aus dem Normentwurf ISO 14443 betreffend kontaktlose Proximity-Chipkarten bekannt.

Die Kommunikation eines Lesegerätes mit einer derartigen Chipkarte erfolgt durch Modulation im Lesegerät, Funkübertragung zur Chipkarte und Demodulation auf der Chipkarte. Die Energieversorgung einer Chipkarte erfolgt zum Beispiel durch die Energie der von ihr empfangenen Sendesignale des Lesegerätes.

Beim Verwendung der Amplitudenmodulation (ASK) als Übertragungsverfahren wird im Lesegerät die Amplitude einer Trägerschwingung durch ein binäres, zu übertragende Informationen repräsentierendes Codesignal zwischen zwei Spannungswerten umgeschaltet, wobei das Verhältnis der beiden Spannungswerte als Modulationsgrad (in einigen Literaturstellen auch als Tastgrad) bezeichnet wird, der z.B. 10% gemäß ISO 14443 sein kann. Dieses Signal wird auf der Chipkarte wieder demoduliert.

Bei der Demodulation auf der Chipkarte ergibt sich das Problem, dass der Pegel (also die Amplitude) des auf der Chipkarte empfangenen Signals, welches in der Anmeldung auch nach seiner Weiterverarbeitung als Eingangssignal bezeichnet wird, erheblich aufgrund unterschiedlicher externer Faktoren schwanken kann, insbesondere aufgrund eines sich ändernden Abstands der Chipkarte vom Lesegerät oder beim Power-Up. Der Arbeitsbereich und damit die Empfindlichkeit des Flankendetektors (bzw. einer dem Flankendetektor vorgeschalteten Empfindlichkeitseinstellungseinrichtung) in einer Demodulationseinrichtung auf der Chipkarte ist an den jeweils aktuellen Pegel des auf der Chipkarte empfangenen Eingangssignals (in einer sogenannten Feel-Phase) anzupassen.

Der interne Stand der Technik der Anmelderin umfaßt hierzu eine Unterbrechung der Demodulation während der Neu- Einstellung ihrer Empfindlichkeit, was jedoch zu Störungen im Betrieb und erhöhter Bitfehlerrate führt.
Eine weitere interne Lösung der Anmelderin mit quasilogarithmischem A-D-Wandler birgt den Nachteil, daß bei einer Umschaltung der Empfindlichkeit zwischen unterschiedlichen Aussteuerungsbereichs-Stufen aufgrund von Fertigungstoleranzen oder -fehlern nicht-monotone Schritte auftreten können.

Eine Aufgabe der vorliegenden Erfindung ist es, im Falle eines ansteigenden oder abfallenden Eingangssignal-Pegels bei der Signalerkennung zeitliche Lücken während einer Arbeitsbereichseinstellung einer Demodulationseinrichtung auf der Chipkarte zu vermeiden.
Die Aufgabe wird bei einer gattungsgemäßen Chipkarte gemäß dem Kennzeichen des Anspruchs 1 gelöst.

Die Erfindung vermeidet durch eine Arbeitsbereichseinstellung in jeweils nur der nicht auf den Ausgang (zum nachgeschalteten Decoder etc.) geschalteten Demodulationseinrichtung zeitliche Lücken in der Signalerkennung, eine erhöhte Bitfehlerrate und zeitkritische Vorgänge.

Die Erfindung ermöglicht einen sehr einfachen Schaltungsaufbau und Steuerungsaufbau. Der Chipflächen-Bedarf der erfindungsgemäßen Schaltung ist gering.

Vorteilhafte Details ergeben sich insbesondere aus den Unteransprüchen.
Zweckmäßig erfolgt eine Umschaltung zwischen den voneinander unabhängigen Demodulationseinrichtungen durch die Umschalteinrichtung periodisch, um durch laufende abwechselnde Empfindlichkeitseinstellung (also Arbeitsbereichseinstellung) der beiden Demodulationseinrichtungen eine laufende Anpassung der jeweils aktuell auf den Ausgang geschalteten Demodulationseinrichtung zu gewährleisten. Die periodische Umschaltung kann in unterschiedlichster Weise erfolgen.
Vorzugsweise ist die Umschalteinrichtung so ausgebildet, daß eine Umschaltung zwischen den Demodulationseinrichtungen jeweils nach Erkennung einer auf eine Startsequenz (z.B. eines Startbits) folgenden Stopsequenz (z.B. eines Stopbits) im Eingangssignal erfolgt, was eine möglicherweise fehlerträchtige Umschaltung während der Übertragung eines Datenframes mit Nutzdaten vermeidet, da die Umschaltung zwischen DatenFrames gelegt wird.

Zur genauen zeitlichen Synchronisierung einer Demodulationseinrichtung mit dem Eingangssignal kann jeweils beim Empfang eines Frames bis zur Erkennung eines Startbits eine Abtastung des Eingangssignals mit höherer Taktfrequenz vorgesehen sein als nach der Erkennung des Startbits, insbesondere wenn jeweils beim Empfang eines Frames bis zur Erkennung eines Startbits das Eingangssignal mehr als einmal pro Bit abgetastet wird; dabei ist nach der Erkennung des Startbits eine Abtastung nur einmal pro Bit des Eingangssignals erforderlich.

Ein einfacher Aufbau der Empfindlichkeitseinstellungseinrichtung wird ermöglicht durch einen Empfindlichkeitseinstellungswiderstand mit mehreren auswählbaren Anzapfungsstufen, über welche Anzapfungsstufen mit unterschiedlichem Widerstand das Eingangssignal den Demodulationseinrichtungen zuführbar ist.

Ferner ist es vorteilhaft, wenn die ohmschen Widerstände jeweils zweier benachbarter Anzapfungsstufen des Empfindlichkeitseinstellungswiderstands zueinander im gleichen Verhältnis stehen, was eine geometrische Teilung der Anzapfungsstufen und damit eine besonders zweckmäßige Unterteilung des Arbeitsbereiches der Chipkarte in mehrere Empfindlichkeitsstufen bedingt.

Vorteilhaft ist es ferner, wenn eine Stromteilerschaltung zum Abzweigen von mehr als 1/500, vorzugsweise mehr als 1/100, insbesondere etwa 1/50, des Eingangssignal-Stromes in die Demodulationsschaltung vorgesehen ist, da dies eine niedrigohmige Ausbildung des Empfindlichkeitseinstellungswiderstands einer Demodulationsschaltung ermöglicht, aufgrund welcher seine durch seine parasitären Kapazitäten bedingte Grenzfrequenz niedriger als bisher üblich, insbesondere im einstelligen MHz-Bereich liegen kann.

Der Empfindlichkeitseinstellungseinrichtung der Chipkarte ist vorzugsweise eine Eingangssignalmaximumverfolgungseinrichtung nachgeschaltet, durch welche ein Maximum im Eingangssignal als Höhe eines zu detektierenden High-Pegels bestimmbar ist, welches Maximum zur Festlegung eines Schwellwertes für eine Unterscheidung zwischen einem High-Bit und einem Low-Bit in einer Schwellwertdigitalisierungseinrichtung verwendbar ist.

Dies ermöglicht eine zuverlässige Unterscheidung von High- und Low-Pegeln, also logischen Einsen und Nullen im Eingangssignal.

Ferner kann eine Subcarriererkennungseinrichtung zum Erkennen eines von einer anderen Chipkarte ausgesendeten Subcarriers im Eingangssignal und zum Unterscheiden des Subcarriers von einer zu detektierenden Startsequenz oder Endsequenz eines Frames vorgesehen sein, was auch bei Einstreuungen von Signalen durch der Chipkarte räumlich nahe weitere Chipkarten in das Eingangssignal eine präzise Detektion von Startsequenzen und Stopsequenzen im Eingangssignal erlaubt.

Der Tiefpaß der Demodulationseinrichtung ist zweckmäßig als separates Modul ausgebildet, was eine genaue Einstellung der Grenzfrequenz und Anpassung an die Datenrate des Eingangssignals erlaubt.

Weitere Merkmale und Vorteile ergeben sich aus der nachfolgenden Beschreibung eines Ausführungsbeispiels anhand der Zeichnung. Dabei zeigt:
- Fig. 1: ein Blockschaltbild der erfindungsgemäßen Chipkarte mit zwei Demodulationseinrichtungen,
- Fig. 2: eine Demodulationseinrichtung mit einer Empfindlichkeitseinstellungseinrichtung,
- Fig. 3: eine Steuerung und einen Decoder zum Dekodieren des demodulierten Eingangssignals,
- Fig. 4,5: Subcarrierdetektionseinrichtungen zur Unterscheidung von Subcarriern anderer Chipkarten von Bitsequenzen im Eingangssignal.

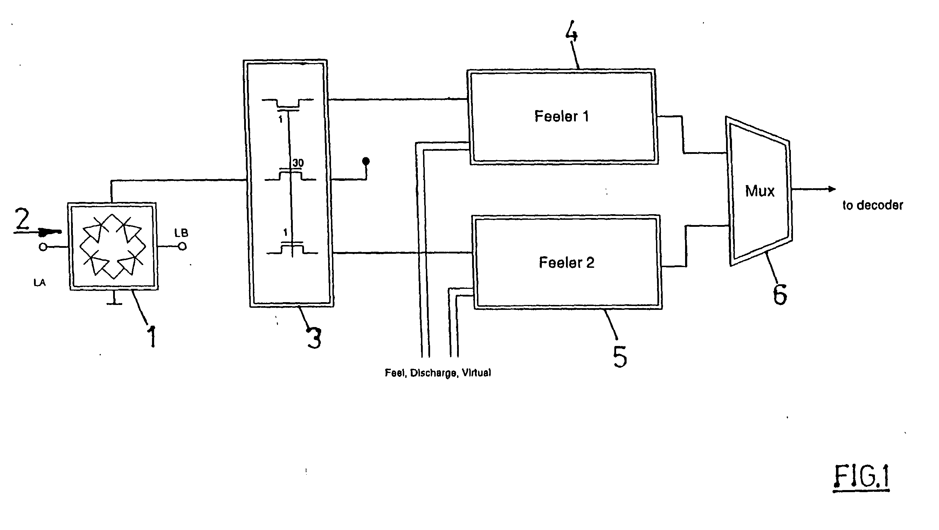

Figur 1 zeigt einen auf einer erfindungsgemäßen Chipkarte angeordneten Gleichrichter 1 zum Gleichrichten eines Eingangssignals 2, eine nachgeordnete Stromteilerschaltung 3 zum Auskoppeln eines Stromanteiles (hier 1/30) für die Demodulationsschaltung, zwei (auch als Feeler bezeichnete) abwechselnd zueinander ihre Empfindlichkeit einstellende Demodulationseinrichtungen 4,5 (mit jeweils zugehöriger Empfindlichkeitseinstellungseinrichtung zur Einstellung der Empfindlichkeit einer Demodulationseinrichtung und einem Tiefpaß) und einen Multiplexer 6, welcher das von einer der beiden Demodulationseinrichtungen demodulierte Eingangssignal an einen Decoder weiterleitet.

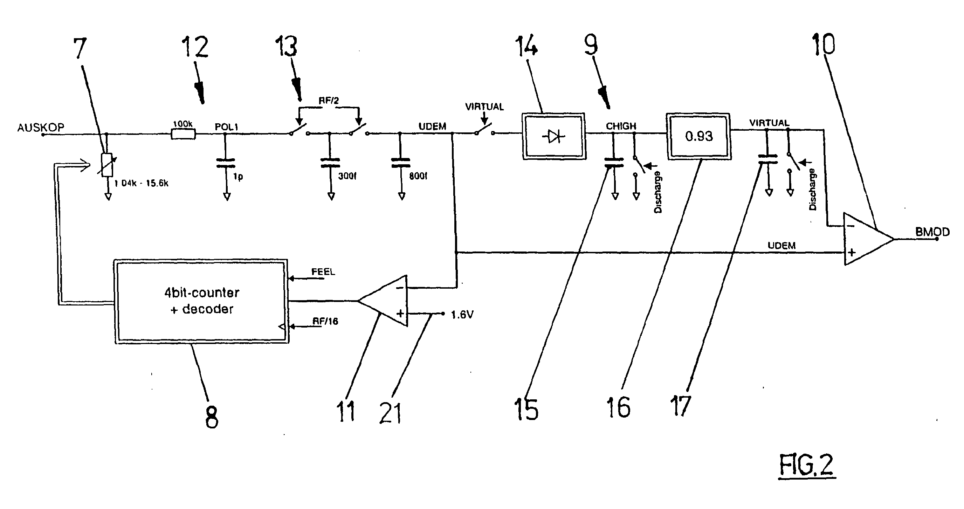

Fig. 2 zeigt eine (4) der (mindestens) zwei Demodulationseinrichtungen 4, 5 in Figur 1. Die Empfindlichkeitseinstellungseinrichtung der Demodulationseinrichtung 4 umfaßt einen Empfindlichkeitseinstellungswiderstand 7 mit mehreren einstellbaren Anzapfungsstufen (entsprechend mehreren realen Widerständen), einen Zähler 8 (4-bit-counter) zur fortlaufenden Anwahl der Anzapfungsstufen des Einstellungswiderstandes, eine Eingangssignalmaximumverfolgungseinrichtung 9 (zur Bestimmung der Höhe eines High- Pegels im Eingangssignal) sowie einen Komparator 10 zum Erkennen von logischen "0"- und "1"-Bits im Eingangssignal.

Das über die Stromteilerschaltung 3 ausgekoppelte Eingangssignal wird zur Strom-/Spannungsumsetzung über den Empfindlichkeitseinstellungswiderstand 7 geführt. Dieser kann wegen des relativ hohen in die Demodulationseinrichtungen abgezweigten Stromanteils relativ niedrigohmig ausgeführt werden, so daß die Grenzfrequenzen seiner Anzapfungsstufen im Bereich von einigen MHz liegen und beim Stand der Technik erforderliche Kapazitäten zur Sicherstellung gleicher Grenzfrequenz für alle Anzapfungsstufen entfallen können.

Die Widerstände jeweils zweier Anzapfungsstufen des Empfindlichkeitseinstellungswiderstandes 7 stehen im gleichen Verhältnis, so daß sich eine geometrische Teilung des insgesamt möglichen Aussteuerungsbereiches in mehrere Empfindlichkeitsstufen ergibt.

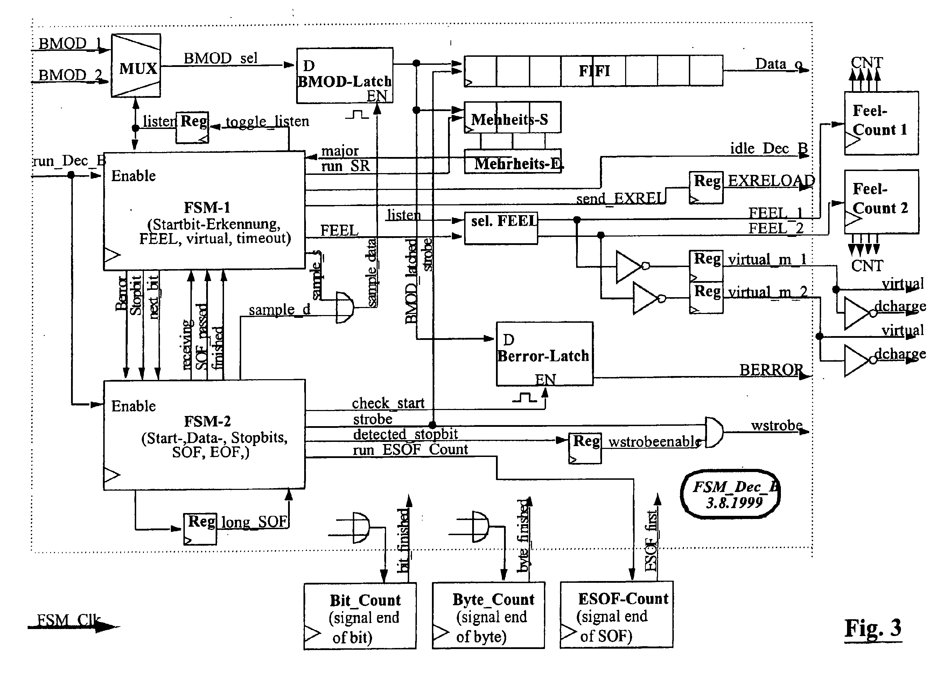

Die Empfindlichkeit (also die Aussteuerung) der Demodulationseinrichtung 4 wird mittels sukzessiver Anwahl der Anzapfungsstufen (mit jeweils anderem Widerstand) des Empfindlichkeitseinstellungswiderstandes 7 durch den Zähler 8 eingestellt, wobei mit der geringsten Empfindlichkeit entsprechend der kleinsten Anzapfungsstufe (= der mit dem kleinsten Widerstand) begonnen wird und solange zur nächsthöheren Anzapfungsstufe umgeschaltet wird, bis der Empfindlichkeitseinstellungs-Komparator 11 eine Spannung (UDEM) oberhalb einer vorgegebenen Schwelle 21 (hier 1.6 V) detektiert. Diese Spannung UDEM wird dem Digitalisierungs-Komparator 10 zugeführt, welcher sie mit dem bisher von der Eingangssignalmaximumverfolgungseinrichtung 9 gemessenen (mit einem Faktor multiplizierten) Maximum der Spannung UDEM des Eingangssignals vergleicht und bei Überschreiten des mit einem Faktor multiplizierten Maximumwertes eine digitale ("1"), sonst eine digitale Null ("0") an den Decoder (in Figur 3) ausgibt.

Der Zähler 8 ist durch das Signal FEEL von einer Steuerung in die wie oben beschrieben ablaufende Empfindlichkeitseinstellungsphase schaltbar.

Der Tiefpaß 12, 13 ist in der Demodulationseinrichtung in Figur 2 dem Anzapfungswiderstand 7 nachgeschaltet und umfaßt ein Anti-Aliasing-Filter 12 aus einem RC-Glied und ein diesem nachgeschaltetes Switched-Capacity-Filter 13 (hier mit der Sample-Frequenz 6.78 MHz, einem Kapazitätsverhältnis CLöffel zu CEimer = 3/8, und einer Grenzfrequenz 404 kHz), wodurch der Tiefpaß für eine Datenübertragungsrate des Eingangssignals von 105 kbps ausgelegt ist, die jedoch eventuell auch verdoppelt werden könnte.

Die Eingangssignalmaximumverfolgungseinrichtung 9 wird durch das Signal VIRTUAL einer Steuerung aktiviert, welche ihr das (tiefpaßgefilterte) Eingangssignal über eine Diode 14 zuführt. Sie umfaßt einen Kondensator 13 zur Detektion des Maximums CHIGH des Eingangssignals.
Vor einer Empfindlichkeitseinstellungsphase der Demodulationseinrichtung wird der Kondensator 13 (auf ein von einer Steuerung gegebenes Signal Discharge hin) entladen. Der Kondensator 13 hält das Spannungsmaximum des Eingangssignals fest, welches mit einem Faktor (hier 0.93) multipliziert (im Spannungsteiler oder dergleichen mit dem Bezugszeichen 16) an einem Kondensator 17 und als Schwelle VIRTUAL am Digitalisierungs-Komparator 10 anliegt. Durch die Eingangssignalmaximumverfolgungseinrichtung 9 wird die ohne sie auftretende Unsicherheit hinsichtlich der Höhe eines High-Pegels im Eingangssignal aufgehoben, deren Ausmaß sich sonst aus dem Verhältnis benachbarter Anzapfungswiderstandstufen und einem dem Kehrwert des dem ASK-Tastgrad von 10% entsprechenden Hubs von Null Komma Acht ergäbe.

Jede Demodulationseinrichtung 4 und 5 ist in 2 Phasen betreibbar, nämlich einer Empfindlichkeitseinstellungsphase (= Feel-Phase), in welcher sie wie oben ausgeführt ihre Empfindlichkeit einstellt und einer Demodulationsphase, in welcher sie ohne Empfindlichkeitseinstellung demoduliert. Dabei befindet sich immer nur höchstens eine Demodulationseinrichtung 4 oder 5 in einer Empfindlichkeitseinstellungsphase, währenddessen das von der anderen gelieferte demodulierte Signal auf den Ausgang der Demodulationsschaltung gelegt und dem Decoder zugeführt wird.

Figur 3 zeigt einen möglichen Aufbau eines der Demodulationsschaltung nachgeschalteten, eine Steuerung umfassenden Decoders zum Gewinnen von Nutzdaten-Frames aus dem demodulierten Eingangssignal.
Am Decoder liegen die demodulierten Eingangssignale BMOD1 der einen Demodulationseinrichtung und BMOD2 der anderen Demodulationseinrichtung, das Enablesignal vom SFR run_Dec_B und der Takt FSM_Clk mit einer Taktfrequenz von 848 kHz an. Ausgangssignale des Decoders sind die Steuerungssignale FEEL_1 und FEEL_2 für die Zähler (FEEL-Counter) der Empfindlichkeitseinstellungseinrichtungen der Demodulationseinrichtungen, die Steuersignale für die Einstellung der Bewertungs-Schwellen virtual_m_1 und virtual_m_2 der beiden Demodulationseinrichtungen in der Eingangssignalmaximumverfolgungseinrichtung 9, der Datenausgang Data_o, der Ausgang Dec_B zum SFR, EXRELOAD zur Timersteuerung, BERROR zum SFR und wstorbe zum FiFo.

Sobald der Decoder über run_Dec_B aktiviert ist, wartet er auf ein Startbit im demodulierten) Eingangssignal. Die beiden Demodulationseinrichtungen (FEEL-Schaltungen) 4, 5 vertauschen periodisch nach der Dauer von jeweils 8 Bit ihre Rolle, wobei die eine von Empfindlichkeitseinstellung auf Demodulation (ohne Empfindlichkeitseinstellung) und die andere von Demodulation auf Empfindlichkeitseinstellung umschaltet. Der Umschaltzeitpunkt der beiden Demodulationseinrichtungen wird so gelegt, dass er nicht in einem Nutzdaten-Frame im (demodulierten, digitalisierten) Eingangssignal liegt. Hierzu wird die zeitliche Lage des Eingangssignals genau festgestellt (bis zur Detektion eines Startbits mit vielfacher Abtastrate des Eingangssignalbitstromes).

In einer Steuerung der Chipkarte ist eine Umschalteinrichtung (FSM-1 in Figur 3) vorgesehen, welche zwischen den beiden Demodulationseinrichtungen umschaltet, also das demodulierte Signal der aktuell nicht ihre Empfindlichkeit einstellenden Demodulationseinrichtung digitalisiert als Ausgangssignal an den Decoder anlegt.

Gemäß der Schaltung in Figur 3 ist AFE.1 in der Demodulatorphase, wenn das erste Startbit eintrifft. Nach der Mehrheitsentscheidung (hier: weil zweimal eine "0" abgetastet wurde) in einer Mehrheitsentscheidungseinrichtung wird die (zunächst zur präzisen zeitlichen Festlegung der Lage des Abtastimpulses relativ zu den Bits des Eingangssignals erhöhte) Abtastfrequenz verringert (z.B. auf einmal pro Bit des Eingangssignals), so daß die zeitliche Lage des Abtastsignals relativ zu den Bits des Eingangssignals fixiert ist. Dabei wird nach der Erkennung des ersten Startbits die Umschaltung (des Ausgangs in Figur 2) zwischen den beiden Demodulationseinrichtungen (FEEL1 und FEEL2) bis zum Ende des SOF oder des (Nutz-) Bytes verlegt, zweckmäßig bis nach dem Eintreffen des ersten Stopbits. Nach dem ersten Startbit erwartet der Decoder kein Nutz-Byte eines Frames, sondern die Sequenz SOF (umfassend 10 mal "0" inklusive Startbit und einmal eine "1"). Nach dem zweiten Startbit folgt das Byte mit den Bits 10101010 (in dieser zeitlichen Reihenfolge) und dem Stopbit. Nach dem Empfang des Stop-Bits wird auf die andere Demodulationseinrichtung umgeschaltet und die Daten werden aus dem Hilfsregister FIFI in das Register FIFO übertragen.

Nach dem 3. Startbit folgt die Sequenz EOF. Dabei ist anstelle des Stoppbits eine 0 eingefügt.
Der Decoder erkennt dies als Rule Violation und damit als EOF. Die Daten, die der Decoder während des Ablaufs des EOF gesammelt hat, werden verworfen und aus dem Schieberegister FIFI nicht ausgegeben. Danach ist der Decoder im Idle-Zustand (Leerlauf), der im SFR angezeigt wird.

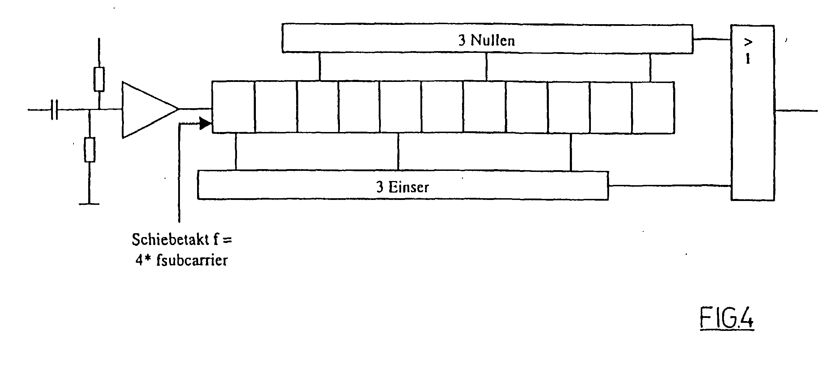

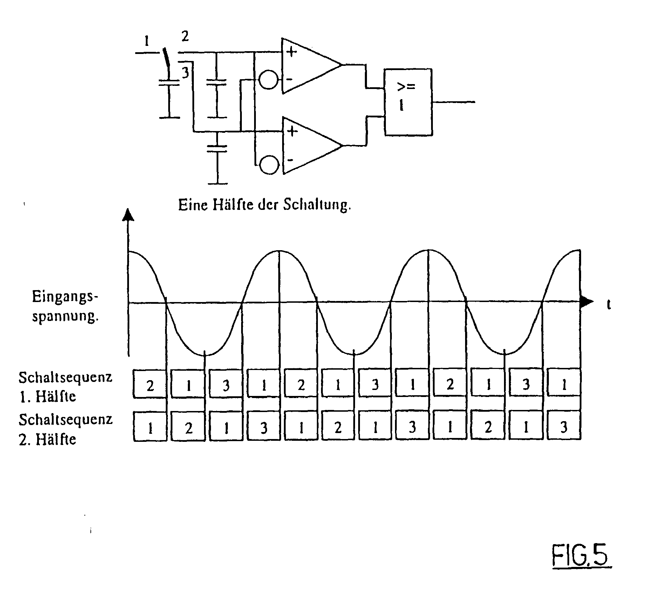

Wenn sich in der Nähe der erfindungsgemäßen Chipkarte eine weitere Chipkarte befindet, kann das Problem auftreten, daß der von der weiteren Chipkarte ausgesendete Subcarrier mit einem Startbit im Eingangssignal verwechselt wird. Dies kann durch eine Schaltung gemäß Figur 4 oder Figur 5 vermieden werden.
Während die Schaltung gemäß Figur 5 mit einem Umschalter zum periodischen Umschalten zwischen Kondensatoren (zum Halten jeweils eines Signales), welchen Komparatoren und ein Oder-Glied nachgeschaltet sind, arbeitet, arbeitet die Schaltung gemäß Figur 4 mit einem Schieberegister, für welches bestimmte Positionen auf Nullen und Einsen geprüft werden, um typische Subcarrier-Sequenzen weiterer Chipkarten zu detektieren.

### Bezugszeichenliste

- 1: Gleichrichter
- 2: Eingangssignal
- 3: Stromteilerschaltung
- 4: Demodulationseinrichtung
- 5: Demodulationseinrichtung
- 6: Multiplexer
- 7: Empfindlichkeitseinstellungswiderstand
- 8: Zähler (4-bit-counter)
- 9: Eingangssignalmaximumverfolgungseinrichtung
- 10: Komparator
- 11: Empfindlichkeitseinstellungs-Komparator
- 12: Anti-Aliasing-Filter des Tiefpasses
- 13: Switched-Capacity-Filter des Tiefpasses
- 14: Diode
- 15: Schwelle
- 16: Spannungsteiler
- 17: Ausgang einer Demodulationseinrichtung

## Patentansprüche

1. Chipkarte mit einer Demodulationsschaltung durch welche ein empfangenes Eingangssignal (1) in ein Ausgangssignal demodulierbar ist, wobei
die Demodulationsschaltung mindestens zwei Demodulationseinrichtungen (4, 5) umfaßt, und
eine Umschalteinrichtung (FSM-1) zum wiederholten Umschalten zwischen den beiden Demodulationseinrichtungen (4, 5) vorgesehen ist, **dadurch gekennzeichnet, daß**
nur jeweils der Aussteuerungsbereich einer Demodulationseinrichtung (4; 5)durch Veränderung von deren Empfindlichkeit mit einer Empfindlichkeitseinstellungseinrichtung (7, 8, 11) variierbar ist, auf welche (4; 5) durch die Umschalteinrichtung aktuell nicht umgeschaltet wurde.

2. Chipkarte nach Anspruch 1,
**dadurch gekennzeichnet, daß**
die Umschalteinrichtung so ausgebildet ist, dass eine Umschaltung zwischen den Demodulationseinrichtungen (4, 5) periodisch erfolgt.

3. Chipkarte nach einem der vorhergehenden Ansprüche,
**dadurch gekennzeichnet, daß**
die Umschalteinrichtung so ausgebildet ist, daß eine Umschaltung zwischen den Demodulationseinrichtungen (4, 5) jeweils nach Erkennung einer auf eine Startsequenz folgenden Stopsequenz im Eingangssignal (1) erfolgt.

4. Chipkarte nach Anspruch 3,
**dadurch gekennzeichnet, daß**
die Umschalteinrichtung so ausgebildet ist, dass eine Umschaltung zwischen den Demodulationseinrichtungen (4, 5) jeweils nach Erkennung eines auf ein Startbit folgenden Stop-bits im Eingangssignal erfolgt.

5. Chipkarte nach einem der vorhergehenden Ansprüche,
**dadurch gekennzeichnet, daß**
zur genauen zeitlichen Synchronisierung der Demodulationseinrichtungen (4, 5) jeweils beim Empfang eines Frames bis zur Erkennung eines Startbits eine Abtastung des Eingangssignals mit höherer Taktfrequenz vorgesehen ist als nach der Erkennung des Startbits.

6. Chipkarte nach Anspruch 5,
**dadurch gekennzeichnet, daß**
sie so ausgebildet ist, daß jeweils beim Empfang eines Frames bis zur Erkennung eines Startbits das Eingangssignal mehr als einmal pro Bit abgetastet wird und nach der Erkennung des Startbits einmal pro Bit des Eingangssignals.

7. Chipkarte nach einem der vorhergehenden Ansprüche,
**dadurch gekennzeichnet, daß**
ihre Empfindlichkeitseinstellungseinrichtung einen Empfindlichkeitseinstellungswiderstand mit mehreren auswählbaren Anzapfungsstufen aufweist, über welche Anzapfungsstufen mit unterschiedlichem Widerstand das Eingangssignal den Demodulationseinrichtungen (4, 5) zuführbar ist.

8. Chipkarte nach Anspruch 7,
**dadurch gekennzeichnet, daß**
zur Bildung einer geometrischen Teilung der Anzapfungsstufen die Widerstände jeweils zweier benachbarter Anzapfungsstufen des Empfindlichkeitseinstellungswiderstands zueinander im gleichen Verhältnis stehen.

9. Chipkarte nach einem der vorhergehenden Ansprüche,
**dadurch gekennzeichnet, daß**
eine Stromteilerschaltung zum Abzweigen von mehr als 1/500, vorzugsweise mehr als 1/100, insbesondere etwa 1/50, des Eingangssignal- Stromes in die Demodulationsschaltung vorgesehen ist.

10. Chipkarte nach einem der vorhergehenden Ansprüche,
**dadurch gekennzeichnet, daß**
der Empfindlichkeitseinstellungswiderstand einer Demodulationseinrichtung (4; 5) so niedrigohmig ist, dass seine durch seine parasitären Kapazitäten bedingte Grenzfrequenz oberhalb 1 MHz liegt.

11. Chipkarte nach einem der vorhergehenden Ansprüche,
**dadurch gekennzeichnet, daß**
der Empfindlichkeitseinstellungseinrichtung eine Eingangssignalmaximumverfolgungseinrichtung nachgeschaltet ist, durch welche ein Maximum im Eingangssignal als Höhe eines zu detektierenden High-Pegels bestimmbar ist, welches Maximum zur Festlegung eines Schwellwertes für eine Unterscheidung zwischen einem High- Bit und einem Low-Bit im Eingangssignal in einer Schwellwertdigitalisierungseinrichtung verwendbar ist.

12. Chipkarte nach Anspruch 11,
**dadurch gekennzeichnet, daß**
das detektierte und mit einem Faktor multiplizierte Maximum als Schwelle verwendet wird, unterhalb derer ein Low-Bit und oberhalb derer ein High-Bit von der Schwellwertdigitalisierungseinrichtung detektiert wird.

13. Chipkarte nach Anspruch 12,
**dadurch gekennzeichnet, daß**
der Faktor mindestens dem Kehrwert der ASK-Tastung des Eingangssignals entspricht.

14. Chipkarte nach einem der vorhergehenden Ansprüche,
**dadurch gekennzeichnet, daß**
die Empfindlichkeitseinstellungseinrichtung so ausgebildet ist, dass sie von der unempfindlichsten Einstellung in Stufen die Empfindlichkeit erhöht, bis das vom Eingangssignal über einen Empfindlichkeitseinstellungswiderstand abgezweigte Signal einen Schwellwert überschreitet.

15. Chipkarte nach einem der vorhergehenden Ansprüche,
**dadurch gekennzeichnet, daß**
eine Subcarriererkennungseinrichtung zum Erkennen eines von einer anderen Chipkarte ausgesendeten Subcarriers im Eingangssignal und zum Unterscheiden des Subcarriers von einer zu detektierenden Startsequenz oder Endsequenz eines Frames vorgesehen ist.

16. Chipkarte nach einem der vorhergehenden Ansprüche,
**dadurch gekennzeichnet, daß**
eine Demodulationseinrichtung (4, 5) einen Frequenztiefpaß in Form eines separaten Moduls enthält.

17. Chipkarte nach einem der vorhergehenden Ansprüche,
**dadurch gekennzeichnet, daß**
dem Ausgang der Demodulationsschaltung ein Decoder zur Weiterverarbeitung des demodulierten, digitalisierten Eingangssignals nachgeschaltet ist.

## Claims

1. Chip card having a demodulation circuit which allows a received input signal (1) to be demodulated into an output signal, where
the demodulation circuit comprises at least two demodulation devices (4, 5), and
a changeover device (FSM-1) is provided for repeatedly changing over between the two demodulation devices (4, 5), **characterized in that**
only the respective control range of a demodulation device (4; 5) to which (4; 5) the changeover device has not changed over at present can be varied by altering said demodulation device's sensitivity using a sensitivity adjustment device (7, 8, 11).

2. Chip card according to Claim 1,
**characterized in that**
the changeover device is in a form such that changeover between the demodulation devices (4, 5) occurs periodically.

3. Chip card according to one of the preceding claims,
**characterized in that**
the changeover device is in a form such that changeover between the demodulation devices (4, 5) respectively occurs after a stop sequence following a start sequence has been identified in the input signal (1).

4. Chip card according to Claim 3,
**characterized in that**
the changeover device is in a form such that changeover between the demodulation devices (4, 5) respectively occurs after a stop bit following a start bit has been identified in the input signal.

5. Chip card according to one of the preceding claims,
**characterized in that**
for the purpose of accurate timing synchronization of the demodulation devices (4, 5), whenever a frame is received, provision is made for the input signal to be sampled at a higher clock frequency up to identification of a start bit than after identification of the start bit.

6. Chip card according to Claim 5,
**characterized in that**
it is in a form such that whenever a frame is received, the input signal is sampled more than once per bit up to identification of a start bit and once per bit of the input signal after identification of the start bit.

7. Chip card according to one of the preceding claims,
**characterized in that**
its sensitivity adjustment device has a sensitivity adjustment resistor with a plurality of selectable tapping stages, which tapping stages can be used to supply the input signal to the demodulation devices (4, 5) at different resistance.

8. Chip card according to Claim 7,
**characterized in that**
for the purpose of forming a geometrical division for the tapping stages, the resistors in two respective adjacent tapping stages of the sensitivity adjustment resistor are in the same ratio with respect to one another.

9. Chip card according to one of the preceding claims,
**characterized in that**
a current divider circuit is provided for branching off more than 1/500, preferably more than 1/100, particularly approximately 1/50, of the input signal current into the demodulation circuit.

10. Chip card according to one of the preceding claims,
**characterized in that**
the sensitivity adjustment resistor of a demodulation device (4; 5) has such low resistance that its cut-off frequency, which is conditional upon its parasitic capacitances, is above 1 MHz.

11. Chip card according to one of the preceding claims,
**characterized in that**
the sensitivity adjustment device has an input signal maximum tracking device connected downstream of it which allows a maximum in the input signal to be determined as the level of a high level which is to be detected, which maximum can be used to stipulate a threshold value for distinguishing between a high bit and a low bit in the input signal in a threshold value digitization device.

12. Chip card according to Claim 11,
**characterized in that**
the detected maximum multiplied by a factor is used as a threshold below which a low bit and above which a high bit are detected by the threshold value digitization device.

13. Chip card according to Claim 12,
**characterized in that**
the factor corresponds at least to the reciprocal of the input signal's ASK keying.

14. Chip card according to one of the preceding claims,
**characterized in that**
the sensitivity adjustment device is in a form such that it increases the sensitivity from the least sensitive setting in stages until the signal branched off from the input signal via a sensitivity adjustment resistor exceeds a threshold value.

15. Chip card according to one of the preceding claims,
**characterized in that**
a subcarrier identification device is provided for identifying a subcarrier, emitted by another chip card, in the input signal and for distinguishing the subcarrier from a start sequence or end sequence to be detected in a frame.

16. Chip card according to one of the preceding claims,
**characterized in that**
a demodulation device (4, 5) contains a frequency lowpass filter in the form of a separate module.

17. Chip card according to one of the preceding claims,
**characterized in that**
the output of the demodulation circuit has a decoder connected downstream of it for the purpose of processing the demodulated, digitized input signal further.

## Revendications

1. Carte à puce avec un circuit de démodulation par lequel un signal d'entrée reçu (1) est démodulable pour donner un signal de sortie,
le circuit de démodulation comprenant au moins deux dispositifs de démodulation (4, 5), et
un dispositif de commutation (FSM-1) étant prévu pour la commutation répétée entre les deux dispositifs de démodulation (4, 5),
**caractérisée par le fait que**,
par la modification de sa sensibilité avec un dispositif de réglage de sensibilité (7, 8, 11), on ne peut modifier à chaque fois que la plage de réglage de celui des dispositifs de démodulation (4 ; 5) sur lequel (4 ; 5) le dispositif de commutation n'est pas commuté actuellement.

2. Carte à puce selon la revendication 1,
**caractérisée par le fait que** le dispositif de commutation est conçu de telle sorte qu'une commutation entre les dispositifs de démodulation (4, 5) s'effectue périodiquement.

3. Carte à puce selon l'une des revendications précédentes,
**caractérisée par le fait que** le dispositif de commutation est conçu de telle sorte qu'une commutation entre les dispositifs de démodulation (4, 5) s'effectue à chaque fois après la détection d'une séquence de fin faisant suite à une séquence de début dans le signal d'entrée (1).

4. Carte à puce selon la revendication 3,
**caractérisée par le fait que** le dispositif de commutation est conçu de telle sorte qu'une commutation entre les dispositifs de démodulation (4, 5) s'effectue à chaque fois après la détection d'un bit de fin faisant suite à un bit de début dans le signal d'entrée.

5. Carte à puce selon l'une des revendications précédentes,
**caractérisée par le fait que**, pour la synchronisation temporelle précise des dispositifs de démodulation (4, 5), il est prévu à chaque réception d'une trame jusqu'à la détection d'un bit de début un échantillonnage du signal d'entrée avec une fréquence d'horloge supérieure à celle utilisée après la détection du bit de début.

6. Carte à puce selon la revendication 5,
**caractérisée par le fait qu'**elle est conçue de telle sorte que, à chaque réception d'une trame jusqu'à la détection d'un bit de début, le signal d'entrée est échantillonné plus d'une fois par bit et, après la détection du bit de début, il est échantillonné une fois par bit du signal d'entrée.

7. Carte à puce selon l'une des revendications précédentes,
**caractérisée par le fait que** son dispositif de réglage de sensibilité comporte une résistance de réglage de sensibilité avec plusieurs prises sélectionnables, le signal d'entrée pouvant être envoyé aux dispositifs de démodulation (4, 5) par l'intermédiaire de ces prises ayant des résistances différentes.

8. Carte à puce selon la revendication 7,
**caractérisée par le fait que**, pour la formation d'une division géométrique des prises, les résistances de deux prises respectivement voisines de la résistance de réglage de sensibilité se trouvent dans le même rapport l'une à l'autre.

9. Carte à puce selon l'une des revendications précédentes,
**caractérisée par le fait qu'**un circuit diviseur de courant est prévu pour la dérivation de plus de 1/500, de préférence de plus de 1/100 et notamment de 1/50 environ, du courant de signal d'entrée dans le circuit de démodulation.

10. Carte à puce selon l'une des revendications précédentes,
**caractérisée par le fait que** la résistance de réglage de sensibilité d'un dispositif de démodulation (4 ; 5) a une si petite valeur ohmique que sa fréquence limite conditionnée par ses capacités parasitaires est supérieure à 1 MHz.

11. Carte à puce selon l'une des revendications précédentes,
**caractérisée par le fait qu'**il est branché du côté aval du dispositif de réglage de sensibilité un dispositif de poursuite de maximum de signal d'entrée par lequel un maximum dans le signal d'entrée peut être déterminé comme hauteur d'un niveau haut à détecter, lequel maximum est utilisable pour la spécification d'une valeur de seuil pour une distinction entre un bit haut et un bit bas dans le signal d'entrée dans un dispositif de numérisation à valeur de seuil.

12. Carte à puce selon la revendication 11,
**caractérisée par le fait que** le maximum détecté et multiplié par un facteur est utilisé comme seuil au-dessous duquel le dispositif de numérisation à valeur de seuil détecte un bit bas et au-dessus duquel il détecte un bit haut.

13. Carte à puce selon la revendication 12,
**caractérisée par le fait que** le facteur correspond au moins à l'inverse de l'échantillonnage ASK du signal d'entrée.

14. Carte à puce selon l'une des revendications précédentes,
**caractérisée par le fait que** le dispositif de réglage de sensibilité est conçu de telle sorte qu'il augmente graduellement la sensibilité à partir du réglage le moins sensible jusqu'à ce que le signal dérivé du signal d'entrée par l'intermédiaire d'une résistance de réglage de sensibilité dépasse une valeur de seuil.

15. Carte à puce selon l'une des revendications précédentes,
**caractérisée par le fait qu'**un dispositif de détection de sous-porteuse est prévu pour détecter une sous-porteuse émise par une autre carte à puce dans le signal d'entrée et pour distinguer la sous-porteuse d'une séquence de début ou de fin à détecter d'une trame.

16. Carte à puce selon l'une des revendications précédentes,
**caractérisée par le fait qu'**un dispositif de démodulation (4, 5) contient un passe-bas de fréquence sous la forme d'un module séparé.

17. Carte à puce selon l'une des revendications précédentes,
**caractérisée par le fait qu'**un décodeur pour la suite du traitement du signal d'entrée démodulé et numérisé est branché du côté aval de la sortie du circuit de démodulation.
